# EUROPEAN PATENT SPECIFICATION

(11) **EP 0 524 766 B1**
(45) Date of publication and mention of the grant of the patent: **09.10.1996**
(21) Application number: 92306495.0
(22) Date of filing: 15.07.1992
(51) Int. Cl.: G09G 3/36, G02F 1/136

(54) **Liquid crystal display device**
Flüssigkristallanzeigevorrichtung
Dispositif d'affichage à cristaux liquides

(30) Priority: 22.07.1991 JP 181256/91
(43) Date of publication of application: 27.01.1993
(73) Proprietor: KABUSHIKI KAISHA TOSHIBA, Kawasaki-shi, Kanagawa-ken 210 (JP)
(72) Inventor: Suzuki, Kouji, c/o Intellectual Property Div., Minato-ku, Tokyo 105 (JP)
(74) Representative: Luckhurst, Anthony Henry William

(56) References cited:
- EP-A- 0 461 417
- PATENT ABSTRACTS OF JAPAN vol. 13, no. 279 (P-891)27 June 1989 & JP-A-1068723
- PATENT ABSTRACTS OF JAPAN vol. 14, no. 138 (P-10222)15 March 1990 & JP-A-2003023
- INSTITUTE OF ELECTRICAL AND ELECTRONICS ENGINEERS '1988 INTERNATIONAL DISPLAY RESEARCH CONFERENCE' 1988 , I.E.E.E. , NEW YORK, US A 14-IN. - DIAGONAL FULL- COLOR a-SI TFT LCD (T. Nagayasu); pages 56-58;

## Description

The present invention relates to a liquid crystal display device and, more particularly, to an active matrix liquid crystal display device in a normally white mode.

Characteristics of a liquid crystal display device are that it is thin and light, it can be driven at a low voltage, and display a colored image. This type of device has recently been employed as a display device for a personal computer, a wordprocessor, and the like. In particular, an active matrix liquid crystal display device including a switching element for each of pixels does not deteriorate in contrast or response even though the pixels are increased in number. It allows a half-tone display and is the most suitable for use in color television sets and office automation equipment.

Fig. 10 shows a circuit equivalent to a conventional active matrix liquid crystal display device in which thin-film transistors (TFT) are used as switching elements. The liquid crystal display device includes two substrates (an array substrate and an opposed substrate) formed of a transparent insulation material such as glass, and a liquid crystal layer 8 interposed between these substrates. Pixels each having a TFT 3 and a transparent pixel electrode 4 are arranged in matrix on the array substrate. The transparent pixel electrode 4 is connected to the source of the TFT 3, and an address line 1 and a data line 2 are connected to the gate and drain thereof, respectively. An opposed electrode 7 is arranged on the opposed substrate so as to oppose to the transparent pixel electrodes 4. In the liquid crystal display device so constituted, an address signal and a data signal are supplied to the address line 1 and data line 2 at predetermined timing, respectively, with the result that voltages corresponding to display can be selectively applied to the pixel electrodes 4. The orientation of the liquid crystal layer 8 ― i.e. the light transmittance thereof ― can be controlled by a difference in potential between the opposed electrode 7 and pixel electrodes 4, thereby allowing an arbitrary display.

Liquid crystal in a twisted nematic mode is generally used for the liquid crystal layer 8, and a polarizing plate is formed on each of the outer faces of the substrates. Two display modes ― a normally white mode and a normally black mode ― can be achieved in accordance with the arrangement of the polarizing plate. More specifically, when no voltage is applied to the liquid crystal layer 8, the maximum light transmittance represents the normally white mode, whereas the minimum light transmittance indicates the normally black mode. However, since, in the normally black mode, a slight difference in thickness between liquid crystal layers causes irregularities in the minimum light transmittance, and the thicknesses of the optimum liquid crystal layers differ from one another with the wavelength of light transmitted through the liquid crystal layers, high contrast is difficult to achieve. Therefore, the normally white mode is more frequently used.

The process for manufacturing switching elements such as the TFT is extremely complicated, and it is therefore very difficult to form defect-free pixels; some defective pixels are always included in the finished pixels. Defective pixels include a bright spot defective pixel which cause a bright spot defect on the screen of the liquid crystal display device when the screen is displayed black. The bright spot defective pixel degrades the display quality most. Basically, the bright spot defect is caused in the liquid crystal display device in the normally white mode in a case where a voltage of a level which would cause the light transmittance of the liquid crystal layer to vary is not applied to the pixel electrode of the defect. Since there are many causes for this, the bright spot defect cannot be completely eliminated even by use of various types of redundant structures.

As described above, the conventional active matrix liquid crystal display device in the normally white mode has a drawback in which its display quality is greatly degraded because of bright spot defective pixels.

EP 0461417 disclosed an active liquid crystal display element which operates in a normally white mode. The pixel electrode of a defective pixel is connected to the corresponding source bus or corresponding capacitive bus by welding, resulting in the defective pixel becoming a black defect. The capacitive bus is arranged to oppose the pixel electrode.

The present invention has been developed in consideration of the above situation and its object is to provide a liquid crystal display device capable of easily changing a bright spot defective pixel to a vanished spot defective pixel which is unnoticeable as a defect.

The essence of the present invention is that one of bus lines to which predetermined voltages are applied can be connected to pixel electrodes, and a voltage drop in a liquid crystal layer due to a voltage drop in the pixel electrodes is compensated for, using the voltage applied to the bus line.

To attain the above object, the liquid crystal display device according to the present invention comprises:
a matrix array substrate;
an opposed substrate;
a liquid crystal layer interposed between said matrix array substrate and said opposed substrate;
an opposed electrode interposed between said opposed substrate and said liquid crystal layer;
a plurality of pixel electrodes interposed between said matrix array substrate and said liquid crystal layer so as to correspond to said plurality of pixels;
a plurality of switching elements connected to said plurality of pixel electrodes, respectively;
transmission means for transmitting an address signal to said plurality of switching elements to drive said plurality of switching elements;
first and second bus lines arranged to correspond to said plurality of pixel electrodes;
first voltage applying means for applying a first voltage to said first bus line;
second voltage applying means for applying a second voltage to said second bus line; and
short-circuit means for connecting a pixel electrode corresponding to a defective pixel and one of said bus lines,
wherein said first and second bus lines each having an opposed portion which is opposed to each of said plurality of pixel electrodes through an insulating film, and in that the short-circuit means connects the defective pixel and the opposed portion of said first bus line, and wherein said first and second voltages are in anti-phase and satisfy an equation of C₁·V₀₁ = C₂·V₀₂, wherein V₀₁ and V₀₂ indicate amplitudes of the first and second voltages, respectively, and C₁ and C₂ indicate capacitances between the opposed portion of said first bus line and the pixel electrode and between the opposed portion of said second bus line and the pixel electrode.

Preferably, the first and second voltages are alternating current voltages, whose phases are opposite to each other.

According to the liquid crystal display device of the present invention, if one of the first and second bus lines is short-circuited with the pixel electrode in the event that the voltage of the pixel electrode drops, the voltage drop can be compensated for. If the voltage applied to the bus line is set so that the compensated voltage of the pixel electrode is of a level which reduces the light transmittance of the liquid crystal layer, a bright spot defective pixel can be changed to a dark spot defective pixel which does not affect the display quality so much.

Since the pulse voltages whose phases are opposite to each other or in anti-phase are applied to the first and second bus lines, and the values of C₁·V₁ and C₂·V₂ are almost equal to each other, the influence of the pulse voltages upon the pixels electrodes is cancelled in a normal operation, and defect-free pixel electrodes are not influenced by the pulse voltages applied to the bus lines. The reason for this is as follows:

Assuming that the charge stored in a capacitor of capacitance C₁ is Q₁ and the charge stored in a capacitor of capacitance C₂ is Q₂, Q₁ = C₁·V₁ and Q₂ = C₂·V₂. Furthermore, since the phases of the pulse voltages are opposite to each other, the charge ΔQ induced in the pixel electrodes by the pulse voltages is equal to Q₁ + Q₂ = 0.

According to the present invention, in a liquid crystal display device in a normally white mode, a bright spot defective pixel which affects display quality the most adversely can be easily changed to a dark spot defective pixel which does not affect the quality so much.

This invention can be more fully understood from the following detailed description when taken in conjunction with the accompanying drawings, in which:
Fig. 1 is a schematic view of an equivalent circuit of a liquid crystal display device according to a first embodiment of the present invention;
Fig. 2 is a plan view of one pixel of the liquid crystal display device shown in Fig. 1;
Fig. 3 is a cross-sectional view taken along the line III - III of Fig. 2;
Fig. 4 is a view of waveforms of bias voltages;
Fig. 5 is a plan view of one pixel of a liquid crystal display device according to a second embodiment of the present invention;
Fig. 6 is a plan view of pixels of a liquid crystal display device according to a third embodiment of the present invention;
Fig. 7 is a plan view of pixels of a liquid crystal display device according to a fourth embodiment of the present invention;
Fig. 8 is a plan view of pixels of a liquid crystal display device according to a fifth embodiment of the present invention;
Fig. 9 is a view for explaining a connection of a thin-film transistor and a pixel electrode; and
Fig. 10 is a view of an equivalent circuit of a conventional active matrix liquid crystal display device.

Embodiments of the present invention will now be described, with reference to the accompanying drawings.

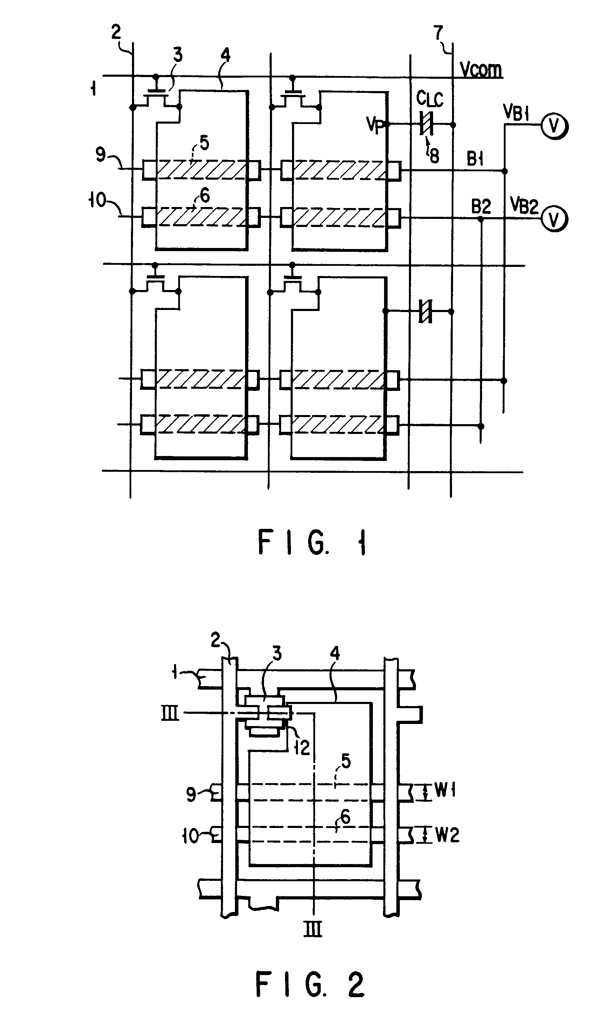

Figs. 1 to 3 show a liquid crystal display device according to the first embodiment of the present invention. The liquid crystal display device comprises two substrates of a matrix array substrate 13 and an opposed substrate 14 formed of a transparent insulating material such as glass, and a liquid crystal layer 8 interposed between the substrates.

A thin-film transistor (TFT) 3 and capacitors 5 and 6 are formed for one pixel of the liquid crystal display device. The gate of the TFT 3 is connected to an address line 1, the source/drain thereof is connected to a pixel electrode 4 through a connection wiring layer 12, and the other source/drain thereof is connected to a data line 2. The capacitors 5 and 6 are constituted of the pixel electrode 4 and bus lines 9 and 10 formed under an insulating film 11 made of, e.g., silicon oxide.

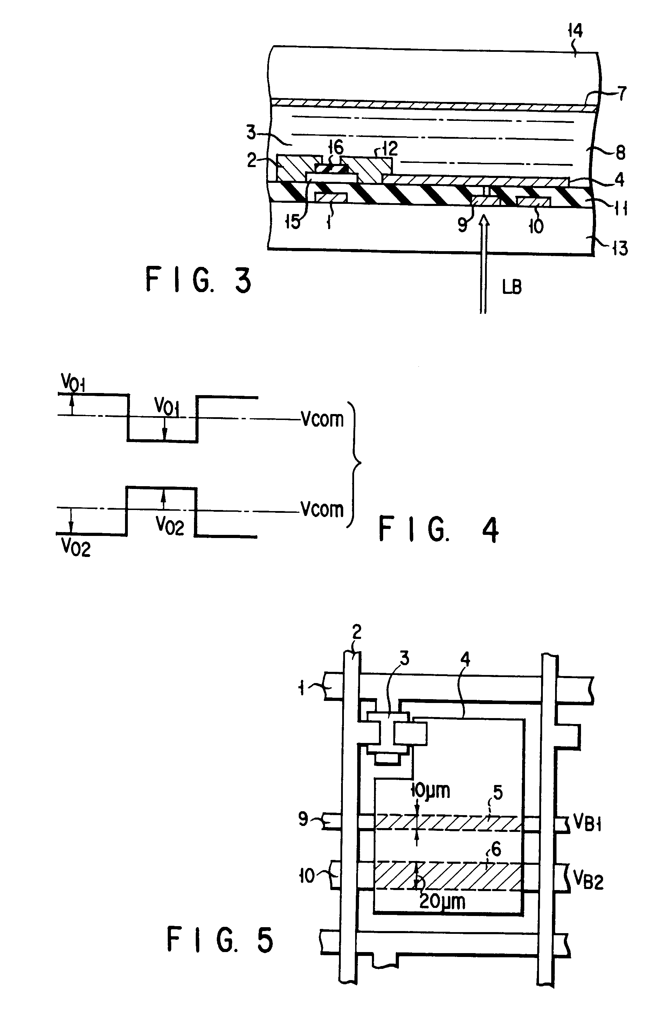

The TFT 3 is a reverse stagger TFT whose gate electrode is constituted of part of the address line 1 formed under an active layer 15 with the insulating film 11 interposed between the address line 1 and the active layer 15. The active layer 15 is formed of amorphous silicon. A channel protection film 16 is formed on the active layer 15 to prevent the active layer 15 from being damaged during the manufacture of the TFT. The pixel electrode 4 is formed of transparent indium tin oxide (ITO). The capacitances C_{S1} and C_{S2} of the capacitors 5 and 6 are both 0.15 pF. The bus lines 9 and 10 are thin films of alloy of molybdenum and tantalum, and their widths are both 15 µm. As shown in Fig. 4, alternating current bias voltages V_{B1} and V_{B2} whose central voltages V_{com} are 5 V, amplitudes V₀₁ and V₀₂ are 4 V, and phases are shifted by 180° to each other, are applied to the bus lines 9 and 10, respectively. The cycles of the bias voltages V_{B1} and V_{B2} are both 30 Hz which corresponds to a value two times as large as a period 1/60 seconds necessary for selecting all the pixels or all the address lines 1 of the liquid crystal display device. If the amplitudes V₀₁ and V₀₂ of the bias voltages V_{B1} and V_{B2} are larger than that of a voltage at which the light transmittance of the liquid crystal layer starts to change, they need not be 4 V.

A pulse signal voltage whose central voltage is 6 V, amplitude is V_{sig} V, and cycle is 30 Hz, is applied to the data line 2 and, in other words, a voltage, which is able to drive the liquid crystal layer 8 in the positive polarity at one time and in the negative polarity at the next time, is applied thereto. The potential V_{com}′ of the opposed electrode 7 is set to 5 V to prevent a DC voltage from being applied to the liquid crystal layer 8.

A normal operation of the liquid crystal display device having the above arrangement will now be described.

When a data signal of 6 ± V_{sig} V is supplied to the data line 2, a selected pulse voltage is applied to the address line 1 in synchronism with the supply of the data signal. Thus the data signal is supplied to the pixel electrode 4 through the TFT 3. When the selected pulse voltage is cut off, switching noise ΔVₚ is generated in the TFT 3, and a pixel electrode potential Vₚ is shifted. Since the switching noise ΔVₚ is about 1V, the voltage held in the pixel electrode 4 is 5 ± V_{sig} (= 6 ± V_{sig}-1) V.

The bias voltages V_{B1} and V_{B2} have different phases which are shifted by 180° to each other, and satisfy the following equation (1).${\text{C}}_{\text{S1}} {\text{·V}}_{\text{01}} {\text{= C}}_{\text{S2}} {\text{·V}}_{\text{02}}$

Consequently, the influence of the bias voltages V_{B1} and V_{B2} is cancelled at the pixel electrode potential Vp, and the pixel electrode potential is not influenced by the bias voltages. A voltage ± V_{S} V corresponding to a difference between the potential of the opposed electrode 7 and pixel electrode potential Vₚ, can thus be applied to the liquid crystal layer 8 and, as in a conventional case, the light transmittance of the liquid crystal layer 8 can be controlled to achieve a desired display.

A method of recovering a bright spot defective pixel of the liquid crystal display device having the above arrangement, will be described. Assume that the connection wiring layer 12 is disconnected, and no voltage is applied to the pixel electrode 4, resulting in a bright spot defective pixel.

A laser beam LB such as a YAG laser beam is emitted from the undersurface of the matrix array substrate 13 to partially damage the bus line 9 and insulating film 11, and the damaged bus line 9 and pixel electrode 4 are short-circuited by the melt of the bus line 9. Since, therefore, the pixel electrode potential Vₚ is equalized with the bias voltage V_{B1}, a pulse voltage of 5 ± 4 V is always applied to the pixel electrode 4. Further, since the potential V_{com}' of the opposed electrode 7 is 5 V, a pulse voltage of ± 4 V is applied to the liquid crystal layer 8. Since the light transmittance of the liquid crystal layer 8 is about 1% at ± 4 V the bright spot defective pixel is changed to a dark spot defective pixel.

The bias voltages V_{B1} and V_{B2} of the bus lines 9 and 10 may not conform to the equation (1) in a normal display operation because of the capacitance of the liquid crystal layer 8. If, however, the central voltage V_{com} and the amplitudes V₀₁ and V₀₂ of the bias voltages V_{B1} and V_{B2} can be adjusted, they can satisfy the equation (1) in principle. Even though a few direct current components are applied to the dark spot defective pixel, no problems occur when the light transmittance is considerably low.

In the liquid crystal display device in the normally white mode according to the first embodiment of the present invention, a bright spot defective pixel having the most adverse influence on display quality, can be changed to a dark spot defective pixel having less adverse influence thereon. Since the dark spot defective pixel is driven by alternating current voltage, the liquid crystal layer is not degraded by the change in the defective pixels.

Fig. 5 is a plan view of one pixel of a liquid crystal display device according to the second embodiment of the present invention. In Fig. 5, the elements corresponding to those of the pixel of the first embodiment shown in Figs. 1 to 3 are denoted by the same reference numerals, and their descriptions are omitted.

The liquid crystal display device of the second embodiment differs from that of the first embodiment in that the widths of the bus lines 9 and 10 are different from each other. The width of the bus line 9 is 10 µm and that of the bus line 10 is 20 µm. The capacitances C_{S1} and C_{S2} of the capacitors 5 and 6 are 0.1 pF and 0.2 pF, respectively. A pulse voltage whose amplitude is 5.0 ± 5.0 V and cycle is 30 Hz, is applied to the bus line 9, whereas a pulse voltage whose amplitude is 5.0 ± 2.5 V and cycle is 30 Hz, is applied to the bus line 10 in anti-phase in relation to that of the pulse voltage applied to the bus line 9. Therefore, the pulse voltages satisfy the equation (1), and no problems arise in the normal display operation of the second embodiment.

A bright spot defective pixel of the second embodiment is recovered, as in the first embodiment. A YAG laser beam is emitted from the undersurface of the matrix array substrate to short-circuit the bus line 9 and pixel electrode 4 and apply a voltage of 5.0 ± 5.0 V to the pixel electrode 4, with the result that the bright spot defective pixel is changed to a dark spot defective pixel.

Since the capacitances C_{S1} and C_{S2} are set to different values in the second embodiment, the amplitude of the pulse voltage applied to the bus line 10 having a capacitor which is larger than that of the bus line 9, can be reduced. A pulse voltage necessary for changing the bright spot defective pixel to the dark spot defective pixel, is applied to the bus line 9.

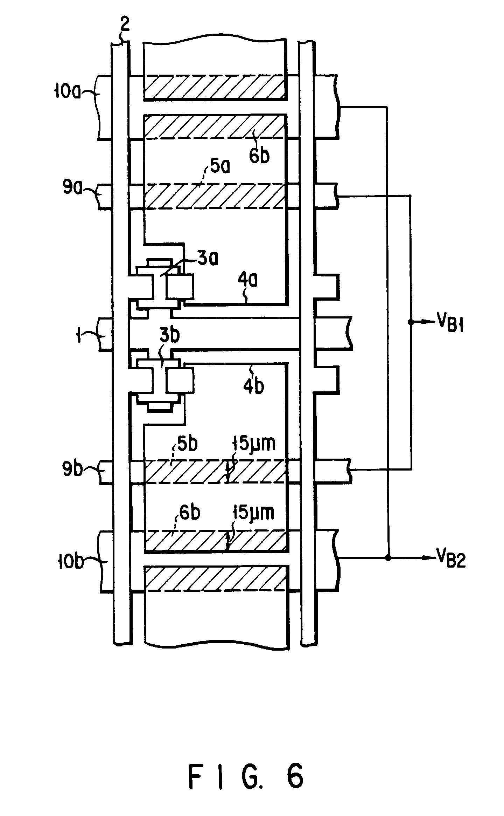

Fig. 6 is a plan view of pixels of a liquid crystal display device according to the third embodiment of the present invention. In Fig. 6, the elements corresponding to those of the pixel of the first embodiment shown in Figs. 1 to 3 are denoted by the same reference numerals, and their descriptions are omitted.

The liquid crystal display device of the third embodiment differs from that of the first embodiment in that a plurality of pixel electrodes are arranged for each pixel. More specifically, one pixel is divided into two sub-pixels, and a switching transistor 3a and a pixel electrode 4a are arranged for one of the subpixels and a switching transistor 3b and a pixel electrode 4b are arranged for the other sub-pixel. Bus lines 9a and 10a, and bus lines 9b and 10b are formed under the pixel electrodes 4a and 4b, respectively. The width of each of the bus lines 9a and 9b is 15 µm. The width of an overlap of the bus line 10a and pixel electrode 4a and that of an overlap of the bus line 10b and pixel electrode 4b are both 15 µm. The bus lines 10a and 10b are also used as those of sub-pixels of the adjacent pixels.

Bias voltages each having an amplitude of 5.0 ± 4 V and a cycle of 30 Hz are applied to the bus lines 9a and 9b, and 10a and 10b. The phases of the bias voltages applied to the bus lines 9a and 9b are opposite to these of the bias voltages applied to the bus lines 10a and 10b. Normally, the same signal is applied to the pixel electrodes 4a and 4b by the same process. The potential of the opposed electrode 7 is set to about 5 V.

A bright spot defective pixel can be recovered if the bus line 9a or 9b and the pixel electrode of one of the bright spot defective sub-pixels are short-circuited by the laser beam to change it to a dark spot defective sub-pixel. Since most of bright spot defective pixels are randomly generated, both of two sub-pixels of one pixel seldom become defective at a time. In most cases, the bright spot defective pixel can be recovered only by changing one of the bright spot defective sub-pixels to a dark spot defective sub-pixel. Therefore, substantially the same display quality can be obtained as when a display operation is performed by normal pixels, even though the luminance of the pixel is reduced to half by the dark spot defective sub-pixel.

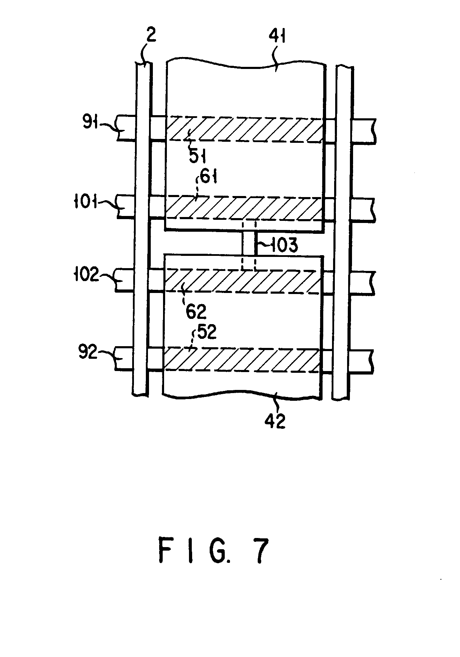

Fig. 7 is a plan view of pixels of a liquid crystal display device according to the fourth embodiment of the present invention. In Fig. 7, the elements corresponding to those of the pixel of the first embodiment shown in Figs. 1 to 3 are denoted by the same reference numerals, and their descriptions are omitted.

The fourth embodiment is a modification to the third embodiment shown in Fig. 6. In the fourth embodiment, one pixel is divided into two sub-pixels. In the third embodiment, the bus lines 10a and 10b are used in common to adjacent sub-pixels, and the capacitances of an overlap of the bus line 10a and the pixel electrode 4a and that of the bus line 10b and the pixel electrode 4b are set equal to those of an overlap of the bus line 9a and the pixel electrode 4a and that of the bus line 9b and the pixel electrode 4b. However, a difference may be caused between the capacitances C_{S1} and C_{S2} by mask displacement in the process for manufacturing a TFT array. To decrease the difference in the capacitances due to the mask displacement, in the liquid crystal display device of the present invention, the width or area of the bus lines 101 and 91 of a sub-pixel 41, is equal to that of the bus lines 102 and 92 of the adjacent sub-pixel 42. Furthermore, since the bus lines 101 and 102 are connected by a bypass 103, these bus lines are electrically connected to each other and supplied with the same signal, even if part of the bus lines is disconnected. If the bypass 103 is considerably narrow, a difference between the capacitances of the capacitors 51, 52, 61 and 62 due to the mask displacement, can be eliminated, and a predetermined signal can be supplied to the bus lines 101 and 102 even when they are disconnected.

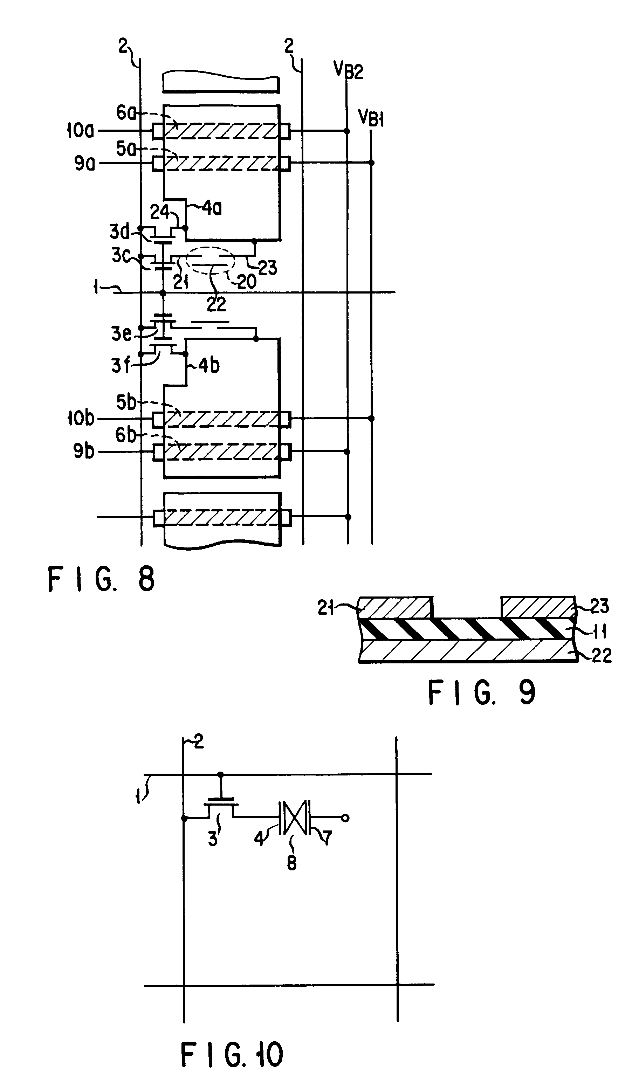

Fig. 8 is a circuit diagram schematically showing pixels of a liquid crystal display device according to the fifth embodiment of the present invention. In Fig. 8, the elements corresponding to those of the pixel of the third embodiment shown in Fig. 6 are denoted by the same reference numerals, and their descriptions are omitted.

One cause of the bright spot defective pixel is a drop in pixel potential due to a defective TFT. It is difficult to distinguish the defective TFT from a normal TFT by their shapes, operations, etc. Generally, it is difficult to distinguish a bright spot defective pixel due to the defective TFT from that due to a defect in wiring connection. In the liquid crystal display device of the fifth embodiment, these two causes of the bright spot defective pixels can easily be distinguished from each other, and the defective pixels can be recovered in accordance with the causes.

The liquid crystal display device of the fifth embodiment differs from that of the third embodiment in that each of the sub-pixels has two TFTs. The sub-pixel electrode 4a includes TFTs 3d and 3c. The TFT 3d is electrically connected to the pixel electrode 4a, and the TFT 3c is connected to the pixel electrode 4a via a connection wiring structure 20, but usually the TFT 3c is not electrically connected thereto. As shown in Fig. 9, a wiring layer 21 connected to the TFT 3c and a wiring layer 23 connected to the pixel electrode 4a are formed opposite to a connection wiring layer 22 with the insulating film 11 interposed therebetween. Similarly, the pixel sub-electrode 4b includes TFTs 3e and 3f.

In the liquid crystal display device according to the fifth embodiment, a bright spot defective pixel is recovered as follows. Assume that the bright spot defective pixel is generated by a voltage drop in the pixel electrode 4a.

A wiring layer 24 connecting the TFT 3d and pixel electrode 4a is cut by the use of a laser to determine with the eye whether the voltage of the pixel electrode 4a has been dropped by a defect in the TFT 3d. If the bright spot defective pixel has been generated by the TFT 3d, a laser beam is emitted from the undersurface of the substrate 13 to connect the wiring layer 21 and connection wiring layer 22 and to connect the connection wiring layer 22 and wiring layer 23, thereby controlling the voltage of the pixel electrode 4a by the TFT 3c. If the bright spot defective pixel has not been generated by the TFT 3d, or if it is generated even by the connection of the TFT 3c and pixel electrode 4a, one of two bus lines 9a and 9b are connected to the pixel electrode 4a using the laser to change the bright spot defective pixel to a dark spot defective pixel.

In the liquid crystal display device according to the fifth embodiment, the bright spot defective pixel due to not only a defect in connection of the wiring layers, but also a defect in characteristics of the TFTs, can easily be recovered.

The pulse voltages whose phases are opposite to each other, have to be applied to the two bus lines 9a and 10a. However, when the operation to recover the bright spot defective pixels is not necessary, i.e., when no bright spot defective pixels are generated, no pulse voltage can be applied to the two bus lines or a predetermined direct current voltage can be applied thereto, with the result that power consumption of the device can be lowered.

The present invention has the advantage that, if a bright spot defective pixel is generated by the short circuit of the capacitors through a pin hole of the insulating film of the capacitors, it is automatically changed to a dark spot defective pixel without using the laser beam.

The present invention is not limited to the above embodiments. In the above embodiments, the potential of the opposed electrode is fixed. However, the present invention can be applied to a liquid crystal display device in which the potential of an opposed electrode is varied along scanning lines or frames. The pulse voltages whose phases are opposite to each other have only to be modulated so that the effect of two bus lines upon the potential of the pixel electrode is equal to that of one bus line. More specifically, the amplitudes and central voltages of the pulse voltages have only to be set to prevent a pulse bias of the bus lines from affecting the potential of the pixel electrode when a signal voltage is 0 V.

The liquid crystal display devices according to the above embodiments are all black-and-white displays. However, the present invention can be applied to a color display using color filters. When one pixel is constituted of unit pixels of red, blue and green in the color display, or of sub-pixels as in the third embodiments, the unit pixels other than a defective unit pixel can be also changed to dark spot unit pixels. If only the defective unit pixel or sub-pixel is recovered, the balance of color is lost, and the display quality may be degraded. Therefore, normal unit pixels can be changed to dark spot unit pixels when the need arises to prevent the display quality from being degraded.

Further, the present invention can be applied to a liquid crystal display device using a three-terminal switching element or a two-terminal switching element other than a TFT.

## Claims

1. An active matrix liquid crystal display device in a normally white mode, having a plurality of pixels, comprising:
a matrix array substrate (13);
an opposed substrate (14);
a liquid crystal layer (8) interposed between said matrix array substrate and said opposed substrate;
an opposed electrode (7) interposed between said opposed substrate and said liquid crystal layer;
a plurality of pixel electrodes (4) interposed between said matrix array substrate and said liquid crystal layer so as to correspond to said plurality of pixels;
a plurality of switching elements (3) connected to said plurality of pixel electrodes, respectively;
transmission means (1) for transmitting an address signal to said plurality of switching elements to drive said plurality of switching elements;
first and second bus lines (9, 10) arranged to correspond to said plurality of pixel electrodes;
first voltage applying means for applying a first voltage to said first bus line;
second voltage applying means for applying a second voltage to said second bus line; and
short-circuit means for connecting a pixel electrode corresponding to a defective pixel and one of said bus lines,
wherein said first and second bus lines each having an opposed portion which is opposed to each of said plurality of pixel electrodes through an insulating film (11), and in that the short-circuit means connects the defective pixel and the opposed portion of said first bus line, and wherein said first and second voltages are in anti-phase and satisfy an equation of C₁·V₀₁ = C₂·V₀₂, wherein V₀₁ and V₀₂ indicate amplitudes of the first and second voltages, respectively, and C₁ and C₂ indicate capacitances between the opposed portion of said first bus line and the pixel electrode and between the opposed portion of said second bus line and the pixel electrode.

2. A device according to claim 1, wherein said first and second voltages are alternating current voltages whose phases differ from each other by 180° and satisfy an equation of C₁·V₁ = C₂·V₂, wherein V₁ and V₂ denote said first and second voltages.

3. A device according to claim 1, wherein said first bus line and said insulating layer (11) are formed of material which is melted by a laser beam, and said short-circuited means is formed of a melt of part of said first bus line.

4. A device according to claim 1, wherein said opposed portion of said first bus line (9) is narrower than said opposed portion of said second bus line, therefore, C_{S1} < C_{S2} and V₀₁ > V₀₂.

5. A device according to claim 1, wherein said plurality of pixels each include a plurality of sub-pixels each having one pixel electrode (4a, 4b).

6. A device according to claim 5, wherein said second bus line (10a, 10b) has a width enough to overlap pixel electrodes of adjacent two pixels, and said opposed portions corresponding to the pixel electrodes of said adjacent two pixels are formed on both sides of said second bus lines.

7. A device according to claim 5, wherein said opposed portions of the second bus lines (101, 102) corresponding to the pixel electrodes of said adjacent two pixels are connected by a line (103) perpendicular to said second bus lines.

## Patentansprüche

1. Aktivmatrix-Flüssigkristallanzeigevorrichtung in einem normalen Weiß-Modus, mit einer Vielzahl von Pixels, mit:
einem Matrixfeldsubstrat (13),
einem gegenüberliegenden Substrat (14),
einer Flüssigkristallschicht (8), die zwischen dem Matrixfeldsubstrat und dem gegenüberliegenden Substrat gelegen ist,
einer gegenüberliegenden Elektrode (7), die zwischen dem gegenüberliegenden Substrat und der Flüssigkristallschicht gelegen ist,
einer Vielzahl von Pixelelektroden (4), die zwischen dem Matrixfeldsubstrat und der Flüssigkristallschicht gelegen sind, um der Vielzahl von Pixels zu entsprechen,
einer Vielzahl von Schaltelementen (3), die jeweils mit der Vielzahl von Pixelelektroden verbunden sind,
einer Übertragungseinrichtung (1) zum Übertragen eines Adreßsignales zu der Vielzahl von Schaltelementen, um die Vielzahl von Schaltelementen anzusteuern,
ersten und zweiten Busleitungen (9, 10), die angeordnet sind, um der Vielzahl von Pixelelektroden zu entsprechen,
einer ersten Spannungsanlegeeinrichtung zum Anlegen einer ersten Spannung an die erste Busleitung,
einer zweiten Spannungsanlegeeinrichtung zum Anlegen einer zweiten Spannung an die zweite Busleitung, und
einer Kurzschlußeinrichtung zum Verbinden einer Pixelelektrode entsprechend einem fehlerhaften Pixel und einer der Busleitungen,
wobei die ersten und zweiten Busleitungen jeweils einen gegenüberliegenden Teil haben, der jeder der Vielzahl von Pixelelektroden über einen Isolierfilm (11) gegenüberliegt, wobei die Kurzschlußeinrichtung das fehlerhafte Pixel und den gegenüberliegenden Teil der ersten Busleitung verbindet, und wobei die ersten und zweiten Spannungen in Gegenphase sind und eine Gleichung C₁ · V₀₁ = C₂ · V₀₂ erfüllen, in der V₀₁ und V₀₂ jeweils Amplituden der ersten und zweiten Spannungen und C₁ und C₂ Kapazitäten zwischen dem gegenüberliegenden Teil der ersten Busleitung und der Pixelelektrode und zwischen dem gegenüberliegenden Teil der zweiten Busleitung und der Pixelelektrode bedeuten.

2. Vorrichtung nach Anspruch 1, wobei die ersten und zweiten Spannungen Wechselstromspannungen sind, deren Phasen voneinander um 180° abweichen und eine Gleichung C₁ · V₁ = C₂ · V₂ erfüllen, wobei V₁ und V₂ die ersten und zweiten Spannungen bedeuten.

3. Vorrichtung nach Anspruch 1, wobei die erste Busleitung und die Isolierschicht (11) aus einem Material gebildet sind, das durch einen Laserstrahl geschmolzen ist, und wobei die Kurzschlußeinrichtung aus einer Schmelze eines Teiles der ersten Busleitung gebildet ist.

4. Vorrichtung nach Anspruch 1, wobei der gegenüberliegende Teil der ersten Busleitung (9) schmaler als der gegenüberliegende Teil der zweiten Busleitung ist, so daß C_{S1} < C_{S2} und V₀₁ > V₀₂ gelten.

5. Vorrichtung nach Anspruch 1, wobei die Vielzahl von Pixels jeweils eine Vielzahl von Unterpixels umfassen, deren jedes eine Pixelelektrode (4a, 4b) hat.

6. Vorrichtung nach Anspruch 5, wobei die zweite Busleitung (10a, 10b) eine ausreichende Breite hat, um Pixelelektroden von benachbarten zwei Pixels zu überlappen, und wobei die gegenüberliegenden Teile entsprechend den Pixelelektroden der benachbarten zwei Pixels auf beiden Seiten der zweiten Busleitungen gebildet sind.

7. Vorrichtung nach Anspruch 5, wobei die gegenüberliegenden Teile der zweiten Busleitungen (101, 102) entsprechend den Pixelelektroden der benachbarten zwei Pixels durch eine Leitung (103) senkrecht zu den zweiten Busleitungen verbunden sind.

## Revendications

1. Dispositif d'affichage à cristaux liquides, matriciel et actif, dans un mode normalement blanc, comportant plusieurs pixels, comprenant:
un substrat de réseau de matrice (13)
un substrat opposé (14):
une couche de cristal liquide (8) agencée entre ledit substrat de réseau de matrice et ledit substrat opposé:
une électrode opposée (7) agencée entre ledit substrat opposé et ladite couche de cristal liquide;
plusieurs électrodes de pixel (4) agencées entre ledit substrat de réseau de matrice et ladite couche de cristal liquide, de sorte à correspondre auxdits plusieurs pixels;
plusieurs éléments de commutation (3) connectés respectivement auxdites plusieurs électrodes de pixel;
un moyen de transmission (1) pour transmettre un signal d'adresse auxdits plusieurs éléments de commutation pour actionner lesdits plusieurs éléments de commutation;
des première et deuxième lignes de bus (9, 10) agencées de sorte à correspondre auxdites plusieurs électrodes de pixel;
un premier moyen d'application d'une tension pour appliquer une première tension à ladite première ligne de bus;
un deuxième moyen d'application de tension pour appliquer une deuxième tension à ladite deuxième ligne de bus;
un moyen de court-circuit pour connecter une électrode de pixel correspondant à un pixel défectueux et l'une desdites lignes de bus,
dans lequel lesdites première et deuxième lignes de bus comportent chacune une partie opposée à chacune desdites plusieurs électrodes de pixel par l'intermédiaire d'un film isolant (11). le moyen de court-circuit connectant le pixel défectueux et la partie opposée de ladite première ligne de bus, et lesdites première et deuxième tensions ayant des phases opposées et satisfaisant à une équation de C₁·V₀₁ = C₂·V₀₂, où V₀₁ et V₀₂ représentent respectivement des amplitudes des première et deuxième tensions, C₁ et C₂ représentant des capacités entre la partie opposée de ladite première ligne de bus et l'électrode de pixel et entre la partie opposée de ladite deuxième ligne de bus et l'électrode de pixel.

2. Dispositif selon la revendication 1, dans lequel lesdites première et deuxième tensions sont des tensions de courant alternatif dont les phases diffèrent les unes des autres de 180° et satisfont à une équation de C₁·V₁ =C₂·V₂, où V₁ et V₂ représentent lesdites première et deuxième tensions.

3. Dispositif selon la revendication 1, dans lequel ladite première ligne de bus et ladite couche isolante (11) sont composées de matériau fondu par un rayon laser, ledit moyen de court-circuit étant composé d'un matériau de fusion d'une partie de ladite première ligne de bus.

4. Dispositif selon la revendication 1, dans lequel ladite partie opposée de ladite première ligne de bus (9) est plus étroite que ladite partie opposée de ladite deuxième ligne de bus, ce qui donne C_{S1} < C_{S2} et V₀₁ > V₀₂.

5. Dispositif selon la revendication 1, dans lequel lesdits plusieurs pixels englobent chacun plusieurs sous-pixels comportant chacun une électrode de pixel (4a, 4b).

6. Dispositif selon la revendication 5, dans lequel ladite deuxième ligne de bus (10a, 10b) a une largeur suffisante pour chevaucher les électrodes de pixel de deux pixels adjacents, lesdites parties opposées correspondant aux électrodes de pixel desdits deux pixels adjacents étant formées sur les deux côtés desdites deuxièmes lignes de bus.

7. Dispositif selon la revendication 5, dans lequel lesdites parties opposées des deuxièmes lignes de bus (101. 102) correspondant aux électrodes de pixel desdits deux pixels adjacents sont connectées par une ligne (103) perpendiculaire auxdites deuxièmes lignes de bus.
